# EUROPÄISCHE PATENTSCHRIFT

(11) **EP 2 607 215 B1**
(45) Veröffentlichungstag und Bekanntmachung des Hinweises auf die Patenterteilung: **24.01.2018**
(21) Anmeldenummer: 12196079.3
(22) Anmeldetag: 07.12.2012
(51) Int. Cl.: B62D 35/02

(54) **Anordnung einer Luftleitvorrichtung an einem Bauelement eines Fahrzeugs**
Arrangement of an air deflector on a vehicle component
Déflecteur aérodynamique sur un composant de véhicule

(30) Priorität: 19.12.2011 DE 102011089074
(43) Veröffentlichungstag der Anmeldung: 26.06.2013
(73) Patentinhaber: Bayerische Motoren Werke Aktiengesellschaft, 80809 München (DE)
(72) Erfinder: Eilenberger, Roland, 85051 Ingolstadt (DE); Wadenstorfer, Anton, 85416 Langenbach (DE); Schuster, Heiko, 47877 Willich (DE)

(56) Entgegenhaltungen:
- DE-A1- 3 347 364
- DE-A1- 4 209 164
- JP-A- 2011 201 543
- US-A1- 2004 155 485

## Beschreibung

Die Erfindung betrifft eine Anordnung einer Luftleitvorrichtung an einem Bauelement eines Fahrzeugs gemäß dem Oberbegriff von Patentanspruch 1.

Aus dem Serienbau von Personenkraftwagen ist es bekannt, in Fahrzeuglängsrichtung vor Rädern, insbesondere Vorderrädern, der Personenkraftwagen jeweils wenigstens einen Radspoiler anzuordnen. Die Radspoiler verlaufen zumindest im Wesentlichen in Fahrzeugquerrichtung und somit zumindest im Wesentlichen senkrecht zur Anströmung der Radspoiler von Luft während der Fahrt der Personenkraftwagen. Die Radspoiler weisen jeweils wenigstens eine Luftleitfläche auf, welche nach vorne gerichtet ist und dazu dient, dass die Luft bei der Fahrt der Personenkraftwagen zumindest teilweise um die Vorderräder herumgeführt und nicht etwa frontal auf Reifen der Vorderräder prallt. Dies führt zur Darstellung eines niedrigeren Luftwiderstandsbeiwerts (cₓ-Wert oder c_{w}-Wert) im Vergleich zu den Personenkraftwagen ohne die Radspoiler.

Die Radspoiler können jedoch auch den Nachteil mit sich bringen, dass sie, insbesondere wenn sie relativ weit in Fahrzeugquerrichtung nach innen gezogen sind, eine Zuströmung von Kühlluft zu Bremsscheiben beeinträchtigen sowie zu einem unerwünschten Achsauftrieb an der Vorderachse führen können. Die Radspoiler stellen auch für sich einen Widerstand für die Luftströmung dar, wobei dieser Luftwiderstand infolge der verbesserten Umströmung der Vorderräder überkompensiert wird.

Die EP 2 039 595 B1 offenbart eine Luftleitvorrichtung für ein Fahrzeug, mit einem Radspoiler, der im Bereich vor einem Fahrzeugrad in einer Ebene etwa quer zur Fahrtrichtung des Fahrzeugs angeordnet ist und vom Unterbodenbereich des Fahrzeugs nach unten in Richtung der Fahrbahn absteht. Dabei weist die Luftleitvorrichtung eine Leitfinne auf, die an den Radspoiler angrenzt und in etwa parallel zur in Fahrtrichtung verlaufenden Vertikalebene verläuft. Es ist vorgesehen, dass sich die Leitfinne zumindest teilweise in einem Bereich vor dem Radspoiler erstreckt.

Aus der EP 1 674 381 ist eine Luftleitvorrichtung für ein Fahrzeug bekannt. Die Luftleitvorrichtung ist im Bereich vor einem Fahrzeugrad angeordnet und steht nach unten in Richtung der Fahrbahn ab. Dabei ist vorgesehen, dass die Luftleitvorrichtung einen Luftleitkörper aufweist, der auf seiner radabgewandten Vorderseite konvex gewölbt ist und der an zumindest einem Teilbereich seines freien Endabschnitts eine Abrisskante aufweist.

Aus gattungsgemäßen der JP 2011-201543 A ist ein Kraftfahrzeug mit vor den Vorderrädern angeordneten Luftleiteinrichtungen bekannt. Die Luftleiteinrichtungen weisen ein Luftleitelement mit einer Keilform auf, wobei die seitlichen Luftleitflächen des Luftleitelements zu einer Spitze zusammenlaufen.

Ferner ist aus der DE 33 47 364 A1 ein Spoiler für ein Hinterrad eines Kraftfahrzeugs bekannt. Die bekannte Luftleiteinrichtung weist eine in Fahrzeugquerrichtung verlaufende gerade Vorderkante auf.

Es ist Aufgabe der vorliegenden Erfindung, eine Anordnung einer Luftleitvorrichtung an einem Bauelement eines Fahrzeugs, insbesondere eines Personenkraftwagens, bereitzustellen, welche eine besonders vorteilhafte Aerodynamik des Fahrzeugs ermöglicht.

Diese Aufgabe wird durch eine Anordnung mit den Merkmalen des Patentanspruchs 1 gelöst. Vorteilhafte Ausgestaltungen mit zweckmäßigen und nicht-trivialen Weiterbildungen der Erfindung sind in den übrigen Ansprüchen angegeben.

Bei einer solchen Anordnung einer Luftleitvorrichtung an einem Bauelement eines Fahrzeugs, insbesondere eines Personenkraftwagens, ist wenigstens ein Luftleitelement der Luftleitvorrichtung in Fahrzeuglängsrichtung vor einem Rad des Fahrzeugs angeordnet und steht zumindest bereichsweise von dem Bauelement in Fahrzeughochrichtung nach unten ab.

Erfindungsgemäß umfasst das Luftleitelement wenigstens zwei in Fahrzeugquerrichtung voneinander abgewandte und sich in Fahrzeuglängsrichtung von vorne nach hinten voneinander weg erstreckende, seitliche Luftleitflächen sowie wenigstens eine in Fahrzeugquerrichtung zumindest teilweise zwischen den seitlichen Luftleitflächen angeordnete und von vorne oben nach hinten unten verlaufende, untere Luftleitfläche. Die seitlichen Luftleitflächen erstrecken sich dabei vorzugsweise jeweils schräg zur Fahrzeuglängsrichtung. Die Luftleitvorrichtung ermöglicht somit eine vorteilhafte Ablenkung von Luft während der Fahrt des Fahrzeugs und in der Folge eine sehr vorteilhafte Umströmung des Rads. Die seitlichen, zumindest im Wesentlichen ebenen Luftleitflächen leiten die Luft seitlich um das Rad, während die untere, zumindest im Wesentlichen ebene Luftleitfläche die Luft nach unten ablenkt. Dabei weist die Luftleitvorrichtung der erfindungsgemäßen Anordnung für sich genommen einen nur sehr geringen Luftwiderstand auf. Dies führt zu einer sehr guten Aerodynamik des Fahrzeugs mit einem nur sehr geringen Luftwiderstandsbeiwert.

Ferner weist das Luftleitelement besonders kleine, äußere Dimensionen auf, so dass es beispielsweise eine Anströmung einer dem Rad zugeordneten Bremsscheibe nicht beeinträchtigt. Dadurch kann die Bremsscheibe effizient und effektiv gekühlt werden. Ein weiterer Vorteil der erfindungsgemäßen Anordnung ist, dass Auftriebskräfte einer Achse, insbesondere einer Vorderachse, der das Rad zugeordnet ist, gering gehalten werden können. Dies führt zu sehr guten Fahreigenschaften des Fahrzeugs. Darüber hinaus beeinträchtigt die Luftleitvorrichtung Auftriebskräfte einer weiteren, von der ersten Achse in Fahrzeuglängsrichtung beabstandeten Achse nicht. Dadurch kann die Luftleitvorrichtung sehr gut zur Abstimmung des Auftriebs an der ersten Achse verwendet werden. Dies kommt den Fahreigenschaften des Fahrzeugs insbesondere bei hohen Geschwindigkeiten zugute.

Außerdem laufen die Luftleitflächen in Fahrzeuglängsrichtung nach vorne zu einer Spitze aufeinander zu. In alternativer Ausführung der Erfindung weist der Luftleitkörper eine gerade Vorderkante auf, welche zumindest im Wesentlichen in Fahrzeugquerrichtung verläuft.

Zudem umfasst die Luftleitvorrichtung neben dem Luftleitelement einen als Radstaulippe ausgebildeten Radspoiler, wobei das Luftleitelement mit dem Radspoiler im Bauelement integriert ist und der Radspoiler von dem Luftleitelement in Fahrzeuglängsrichtung nach hinten beabstandet ist.

In vorteilhafter Ausgestaltung erstrecken sich die seitlichen Luftleitflächen in Fahrzeughochrichtung von oben nach unten lediglich bis auf Höhe der unteren Luftleitfläche. Mit anderen Worten sind jeweilige Kanten der Luftleitflächen in Fahrzeughochrichtung nach unten bündig miteinander angeordnet. Das Luftleitelement ist somit wenigstens außenumfangsseitig zumindest im Wesentlichen in Form einer Pyramide bzw. eines Pyramidenstumpfes oder eines Keils ausgebildet. Daraus resultiert eine sehr gute Aerodynamik der Luftleitvorrichtung für sich genommen, was zu einer sehr guten gesamten Aerodynamik des Fahrzeugs führt.

Bei einer vorteilhaften Ausführungsform der Erfindung ist ein in Fahrzeugquerrichtung verlaufender Abstand zwischen den seitlichen Luftleitflächen durch die untere Luftleitfläche überbrückt. Dadurch kann das Luftleitelement selbst strömungsgünstig von Luft angeströmt werden und die Luft vorteilhaft ablenken. Dies geht mit einer vorteilhaften An- bzw. Umströmung des in Fahrzeuglängsrichtung hinter dem Luftleitelement angeordneten Rads des Fahrzeugs einher.

Jeweilige Winkel, die die Luftleitflächen mit der Fahrzeuglängsrichtung und/oder mit der Fahrzeughochrichtung einschließen, können individuell auf das jeweilige Fahrzeug abgestimmt und bedarfsgerecht eingestellt werden.

In besonders vorteilhafter Ausgestaltung schließt die untere Luftleitfläche mit der Fahrzeuglängsrichtung einen Winkel von bis zu 60° ein. Daraus ergeben sich vorteilhafte aerodynamische Eigenschaften des Luftleitelements und damit der Luftleitvorrichtung. Vorzugsweise verläuft die untere Luftleitfläche zumindest im Wesentlichen parallel zur Fahrzeugquerrichtung.

Bei einer besonders vorteilhaften Ausführungsform der Erfindung liegt der Winkel zwischen der unteren Luftleitfläche und der Fahrzeuglängsrichtung (x-Richtung) in einem Bereich von einschließlich 10° bis einschließlich 30°. Es hat sich gezeigt, dass es in diesem Bereich zu einer besonders vorteilhaften An- und Umströmung des Luftleitelements kommt und das Luftleitelement die Luft zur strömungsgünstigen An- und Umströmung des Rads umlenken bzw. ableiten kann.

In weiterer vorteilhafter Ausgestaltung weist das Luftleitelement auf einer dem Rad zugewandten Seite wenigstens eine Abrisskante auf. Mit anderen Worten ist eine dem Rad zugewandte Hinterkante des Luftleitelements mit einer scharfen Abrisskante versehen. Damit einher geht eine besonders vorteilhafte Beeinflussung der Luft bei der Fahrt des Fahrzeugs.

Zur Darstellung vorteilhafter Strömungsbedingungen ist vorzugsweise vorgesehen, dass jeweilige Übergangsbereiche zwischen den seitlichen Luftleitflächen und der unteren Luftleitfläche gerundet (konvex) ausgebildet sind. Mit anderen Worten sind die Kanten, an denen die jeweiligen Luftleitflächen aneinanderstoßen, mit einem Radius versehen (abgerundet). Vorteilhafterweise beträgt der Radius maximal die Hälfte der Höhe, um die das Luftleitelement von dem Bauelement nach unten absteht.

Zur Vermeidung von Beschädigungen beim Aufsetzen des Fahrzeugs auf den Untergrund, beispielsweise auf einen Bordstein bei einer Bordsteinabfahrt, ist vorgesehen, dass das Luftleitelement um eine Schwenkachse in Fahrzeughochrichtung nach oben verschwenkbar ist.

In weiterer vorteilhafter Ausgestaltung verlaufen die seitlichen Luftleitflächen schräg zur Fahrzeughochrichtung (z-Richtung). Dadurch ist ein definiertes Verschwenken bzw. Einknicken der seitlichen Luftleitflächen und damit des Luftleitelements nach oben möglich, um so eine unerwünschte Beschädigung des Luftleitelements bei dem Aufsetzen des Fahrzeugs zu vermeiden.

Zur Darstellung einer vorteilhaften Ablenkung und Umleitung der Luft schließt sich bei einer Ausführungsform der Erfindung an die untere Luftleitfläche in Fahrzeuglängsrichtung nach hinten eine weitere untere Luftleitfläche des Luftleitelements an, welche von vorne unten nach hinten oben verläuft. Zur Darstellung besonders vorteilhafter Strömungsbedingungen schließt die weitere untere Luftleitfläche mit der Fahrzeuglängsrichtung einen Winkel ein, welcher in einem Bereich von einschließlich 0° bis einschließlich 60° liegt.

Bei einer weiteren vorteilhaften Ausführungsform der Erfindung geht die erste untere Luftleitfläche konvex in die weitere untere Luftleitfläche über. Dies geht mit einem besonders geringen Luftwiderstand des Luftleitelements und damit der Luftleitvorrichtung einher.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

### Die Zeichnung zeigt in:

- Fig. 1: eine schematische Unteransicht einer Anordnung einer Luftleitvorrichtung an einem Bauelement eines Personenkraftwagens, bei welcher das Luftleitelement zwei in Fahrzeugquerrichtung voneinander abgewandte und sich in Fahrzeuglängsrichtung von vorne nach hinten voneinander weg erstreckende, seitliche Luftleitflächen sowie wenigstens eine in Fahrzeugquerrichtung zumindest teilweise zwischen den seitlichen Luftleitflächen angeordnete und von vorne oben nach hinten unten verlaufende, untere Luftleitfläche umfasst;
- Fig. 2: eine schematische Perspektivansicht der an dem Bauelement angeordneten Luftleitvorrichtung gemäß Fig. 1;
- Fig. 3: eine schematische Unteransicht der Anordnung gemäß Fig. 1 mit einer weiteren Ausführungsform der Luftleitvorrichtung;
- Fig. 4: eine schematische Perspektivansicht der an dem Bauelement angeordneten Luftleitvorrichtung gemäß Fig. 3;
- Fig. 5: eine schematische Vorderansicht der Anordnung gemäß Fig. 3;
- Fig. 6: eine schematische Seitenansicht der Anordnung gemäß Fig. 5;
- Fig. 7: eine schematische Seitenansicht der Anordnung gemäß Fig. 6 mit einer weiteren Ausführungsform der Luftleitvorrichtung;
- Fig. 8: eine schematische Seitenansicht der Anordnung gemäß Fig. 7 mit einer nicht erfindungsgemäßen Ausführungsform der Luftleitvorrichtung; und
- Fig. 9: eine schematische Seitenansicht der Anordnung gemäß Fig. 8 mit einer weiteren Ausführungsform der Luftleitvorrichtung.

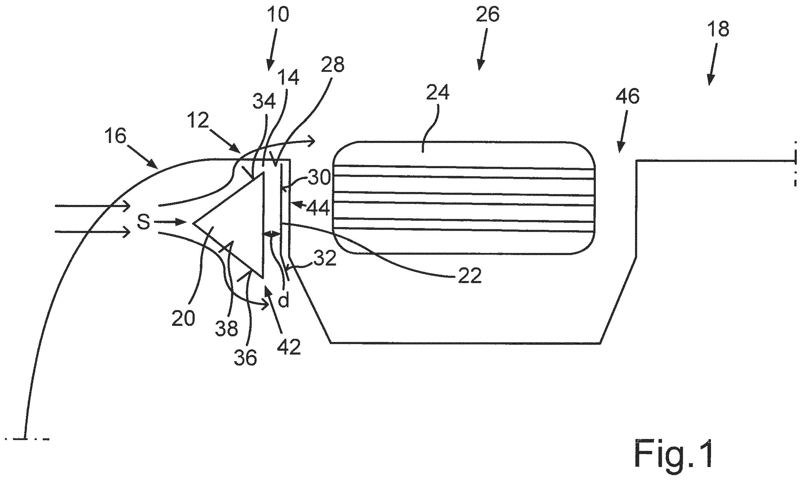

Die Fig. 1 zeigt eine Anordnung 10 einer Luftleitvorrichtung 12 an einem Bauelement in Form eines Verkleidungsteils 14 eines Unterbodens 16 eines Personenkraftwagens 18. Die Luftleitvorrichtung 12 umfasst dabei einen Luftleitkörper 20 sowie einen Radspoiler 22. Die Luftleitvorrichtung 12 ist in Fahrzeuglängsrichtung vor einem Vorderrad 24 einer Vorderachse 26 des Personenkraftwagens 18 in zumindest teilweiser Überdeckung mit dem Vorderrad 24 angeordnet.

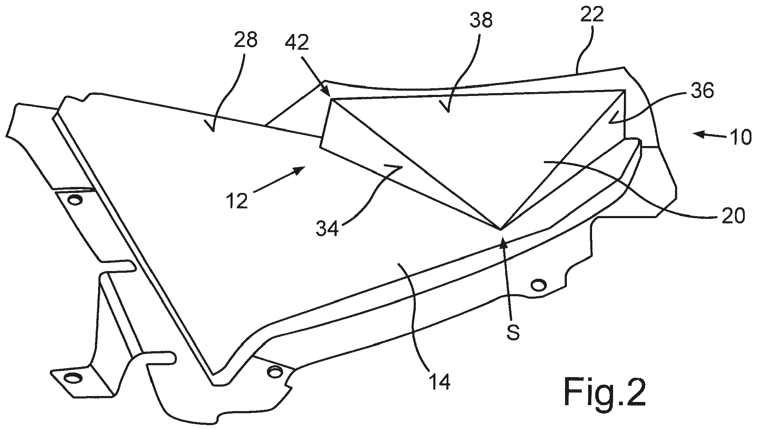

Wie in Zusammenschau mit der Fig. 2 erkennbar ist, stehen der Luftleitkörper 20 und der Radspoiler 22 von einer Unterseite 28 des Verkleidungsteils 14 in Fahrzeughochrichtung nach unten ab.

Der Radspoiler 22 umfasst einen zumindest im Wesentlichen in Fahrzeugquerrichtung verlaufenden ersten Leitbereich 30 und einen sich in Fahrzeugquerrichtung daran anschließenden, zweiten Leitbereich 32, welcher schräg zur Fahrzeugquerrichtung und schräg zur Fahrzeuglängsrichtung verläuft.

Der Luftleitkörper ist zumindest im Wesentlichen in Form einer Pyramide bzw. eines Pyramidenstumpfes ausgebildet und umfasst zwei seitliche Luftleitflächen 34, 36, welche in Fahrzeugquerrichtung voneinander abgewandt sind und sich in Fahrzeuglängsrichtung von vorne nach hinten voneinander weg erstrecken. Gemäß den Fig. 1 und 2 laufen die seitlichen Luftleitflächen 34, 36 in Fahrzeuglängsrichtung nach vorne zu einer Spitze S aufeinander zu.

Der Luftleitkörper 20 weist ferner eine in Fahrzeugquerrichtung zwischen den seitlichen Luftleitflächen 34, 36 angeordnete, untere Luftleitfläche 38 auf, welche von vorne oben nach hinten unten verläuft und in Fahrzeuglängsrichtung nach vorne ebenso mit den seitlichen Luftleitflächen 34, 36 zur Spitze S zusammenläuft. Die Luftleitflächen 34, 36, 38 sind eben ausgebildet ist.

Der Luftleitkörper 20 ist mit dem Radspoiler 22, welcher auch als Radstaulippe bezeichnet wird, in einem Bauteil in Form des Verkleidungsteils 14 integriert, wobei die Radstaulippe in einem vorgebbaren Abstand d von dem Luftleitkörper 20 in Fahrzeuglängsrichtung nach hinten beabstandet ist. Gegebenenfalls kann auch auf die Radstaulippe verzichtet werden und der Luftleitkörper 20 je nach Bauraumgegebenheiten am Unterboden 16 in Fahrzeuglängsrichtung verschoben werden.

Wie in der Fig. 1 durch Richtungspfeile dargestellt ist, ermöglicht die Luftleitvorrichtung 12 eine besonders vorteilhafte Ablenkung und Umlenkung von Luft während der Fahrt des Personenkraftwagens 18, so dass das in Fahrzeuglängsrichtung hinter der Luftleitvorrichtung 12 angeordnete Vorderrad 24 sehr vorteilhaft von der Luft an- bzw. von dieser umströmt wird. Dies führt zu einer besonders guten Aerodynamik des Personenkraftwagens 18. Dabei weist die Luftleitvorrichtung 12 selbst einen nur sehr geringen Luftwiderstand bzw. Luftwiderstandsbeiwert auf, da sie ein starkes Aufstauen der Luft vermeidet.

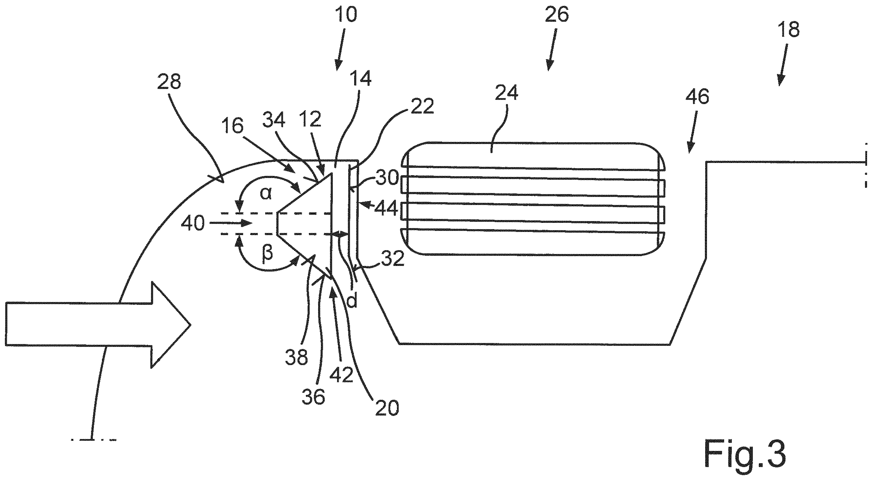

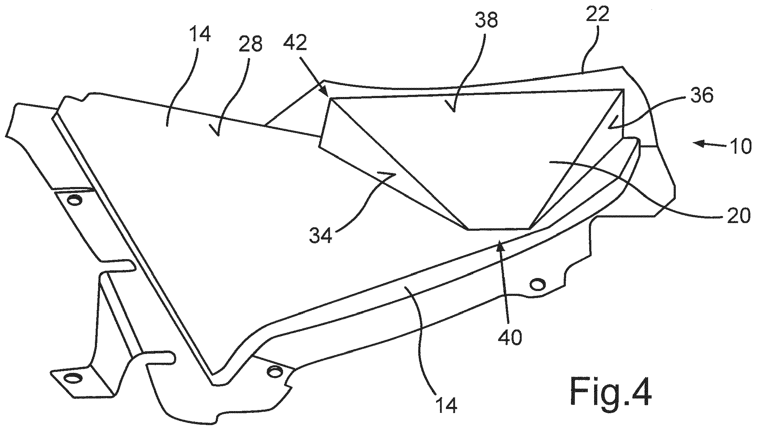

Die Fig. 3 und 4 zeigen eine alternative Ausführungsform der Luftleitvorrichtung 12, wobei - im Gegensatz zur Luftleitvorrichtung 12 gemäß den Fig. 1 und 2 - die Luftleitflächen 34, 36, 38 nicht zur Spitze S zusammenlaufen. Im Gegensatz dazu weist der Luftleitkörper 20 gemäß den Fig. 3 und 4 eine gerade Vorderkante 40 auf, welche zumindest im Wesentlichen in Fahrzeugquerrichtung verläuft. Der Luftleitkörper 20 weist somit zumindest im Wesentlichen die Form eines Keils auf. Die gerade Vorderkante 40 dient als Knickkante, um die der Luftleitkörper 20 beim Aufsetzen des Personenkraftwagens 18 auf einen Bordstein, beispielsweise bei einer Bordsteinabfahrt, in Fahrzeughochrichtung nach oben weg klappen kann.

Wie anhand der Fig. 3 erkennbar ist, verlaufen die seitlichen Luftleitflächen 34, 36 schräg zur Fahrzeuglängsrichtung und schräg zur Fahrzeugquerrichtung und schließen mit der Fahrzeuglängsrichtung jeweilige Winkel α, β ein.

Analog zur Luftleitvorrichtung 12 gemäß den Fig. 1 und 2 ist auch die Luftleitvorrichtung 12 gemäß den Fig. 3 und 4 in das Verkleidungsteil 14 integriert. Mit anderen Worten stellt das Verkleidungsteil 14 das genannte, eine Bauteil dar, in welches der Luftleitkörper 20 und die Radstaulippe (Radspoiler 22) integriert sind. Infolge dieser Integration kann die Luftleitvorrichtung 12 zeit- und kostengünstig zusammen mit dem Verkleidungsteil 14 am übrigen Personenkraftwagen 18 montiert werden.

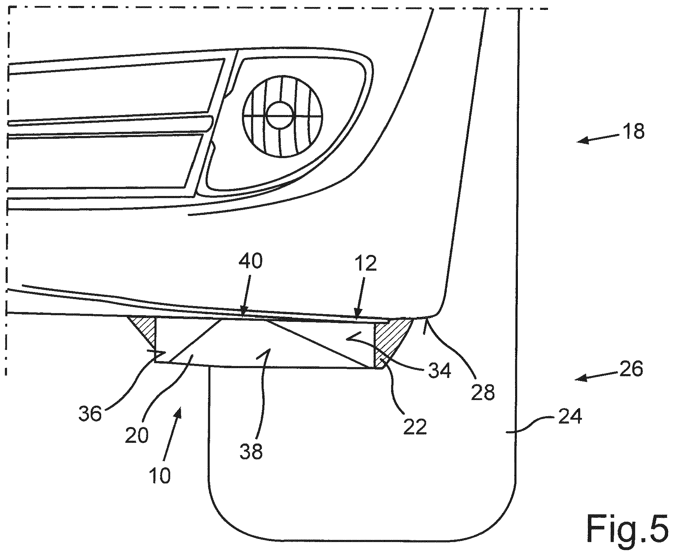

Wie in Zusammenschau mit der Fig. 5 erkennbar ist, stellt der Luftleitkörper 20 einen Volumenkörper dar, mittels welchem die Luft bei der Fahrt des Personenkraftwagens 18 besonders vorteilhaft ablenkbar ist und welcher selbst einen nur sehr geringen Luftwiderstand aufweist.

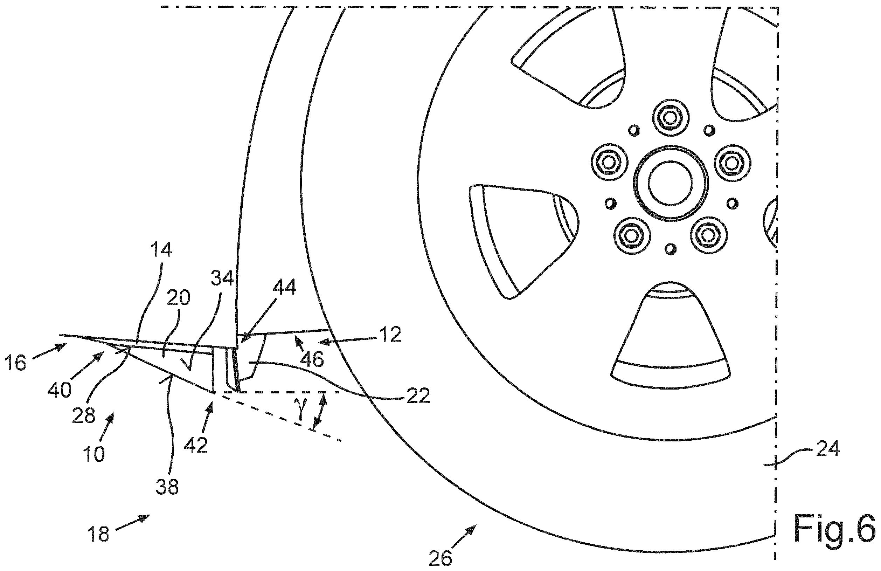

Wie insbesondere der Fig. 6 zu entnehmen ist, schließt die in Fahrzeuglängsrichtung von vorne oben nach hinten unten verlaufende, untere Luftleitfläche 38 mit der Fahrzeuglängsrichtung bzw. mit einer Horizontalen - wenn der Personenkraftwagen 18 auf einer horizontalen Fläche steht - einen vorgebbaren Winkel *γ* ein. Vorzugsweise beträgt der Winkel *γ* maximal 60°. Vorteilhafterweise liegt der Winkel *γ* in einem Bereich von einschließlich 10° bis einschließlich 30°. Dies kommt der Ablenkung der Luft sowie dem geringen Luftwiderstand des Luftleitkörpers 20 zugute.

Die seitlichen Luftleitflächen 34, 36 verlaufen vorzugsweise nicht parallel zur Fahrzeughochrichtung sondern zumindest im Wesentlichen schräg zu dieser, so dass der Luftleitkörper 20 beim Aufsetzen auf einen Bordstein definiert um die als Knickkante fungierende Vorderkante 40 nach oben einknicken bzw. verschwenken kann. So können Beschädigungen des Luftleitkörpers 20 beim Aufsetzen vermieden oder zumindest gering gehalten werden.

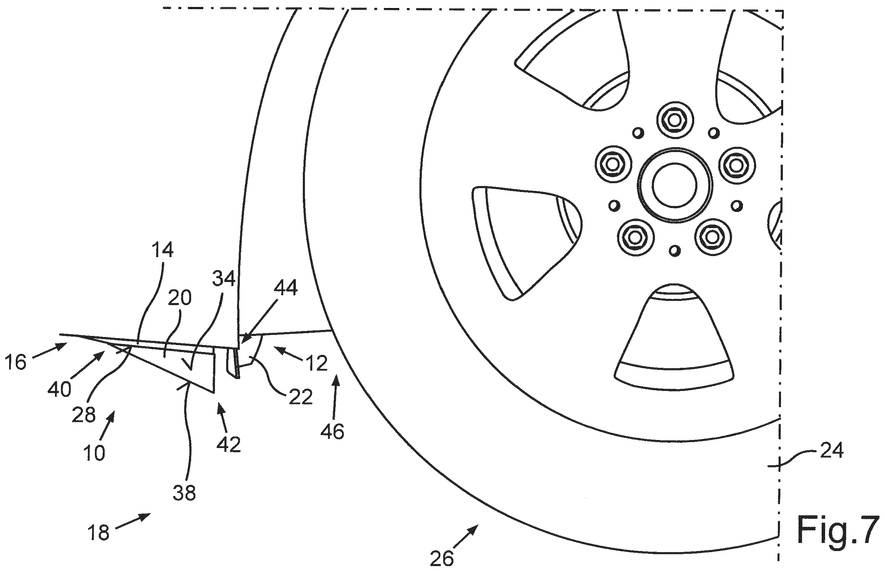

Wie in Zusammenschau mit der Fig. 7 erkennbar ist, kann der Radspoiler 22 hinsichtlich seiner Höhe, um die er in Fahrzeughochrichtung von der Unterseite 28 des Verkleidungsteils 14 nach unten absteht, besonders klein ausgestaltet werden. Dadurch kann eine dem Vorderrad 24 zugeordnete Vorderradbremse bzw. Vorderradbremsscheibe eine sehr gute Zufuhr von Kühlluft über den Unterboden 16 erfahren, was mit einer sehr hohen, passiven Bremskühlung einhergeht. Dadurch ist es beispielsweise möglich, einen Bremskühlschacht hinsichtlich seines Strömungsquerschnitts besonders klein auszugestalten oder auf einen solchen Bremskühlschacht zu verzichten, woraus ein besonders geringer Luftwiderstandsbeiwert (cₓ-Wert oder c_{w}-Wert) des Personenkraftwagens 18 resultiert. Durch die kleine Ausgestaltung des Bremskühlschachtes oder infolge dessen Entfalls steht an einer Fahrzeugfront des Personenkraftwagens 18 Bauraum zur Verfügung, um anderweitige Kühllufteinlässe vorzusehen. Dies ermöglicht eine vorteilhafte Aufteilung der begrenzten Fläche der Fahrzeugfront für Kühllufteinlässe und eröffnet einen sehr großen Spielraum für das Design der Fahrzeugfront.

Auch der Luftleitkörper 20 kann hinsichtlich seiner äußeren Dimensionen besonders klein ausgestaltet werden. So kann er mit einem nur geringen Materialbedarf hergestellt werden, woraus geringe Herstellkosten resultieren. Beispielsweise ist der Luftleitkörper 20 aus einem Weichmaterial gebildet, welches ein vorteilhaftes Einknicken bzw. Wegklappen nach oben im Falle eines Aufsetzens ermöglicht.

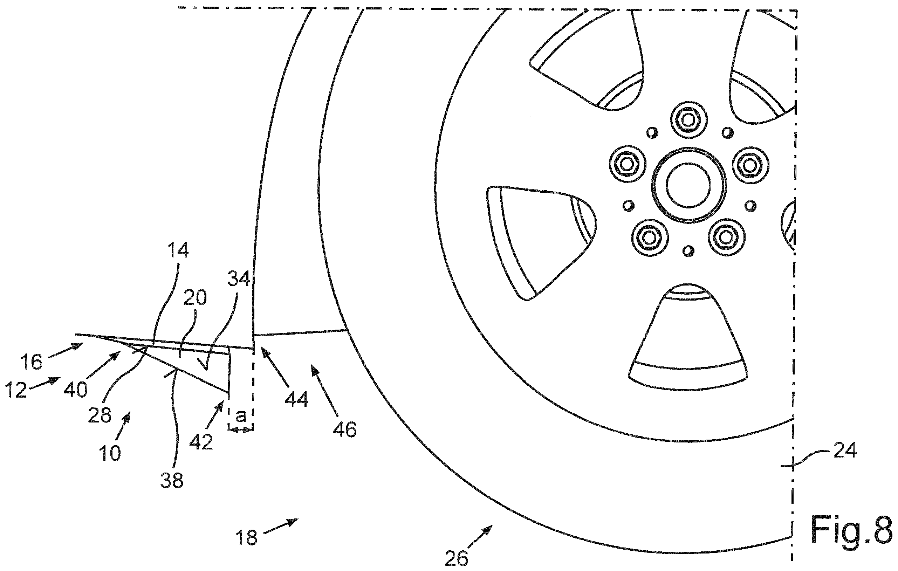

Anhand der Fig. 8 ist erkennbar, dass auf den Radspoiler 22 gegebenenfalls auch verzichtet werden kann, da der Luftleitkörper 20 alleine für eine vorteilhafte Umströmung des Vorderrads 24 sorgen kann. Ein Abstand a zwischen einer dem Vorderrad 24 zugewandten Hinterkante 42 des Luftleitkörpers 20 und einer Vorderkante 44 eines Radhauses 46, in welchem das Vorderrad 24 zumindest teilweise aufgenommen ist, kann variiert werden, um die Umströmung des Vorderrads 24 infolge der Ablenkung der Luft mittels des Luftleitkörpers 20 bedarfsgerecht einzustellen. Entsprechend kann der Abstand a in Fahrzeuglängsrichtung variiert werden.

Vorzugsweise weist der Luftleitkörper 20 auf seiner dem Vorderrad 24 zugewandten Hinterseite, insbesondere an der Hinterkante 42, eine scharfe Abrisskante auf. Dies kommt der vorteilhaften Strömung der Luft zugute.

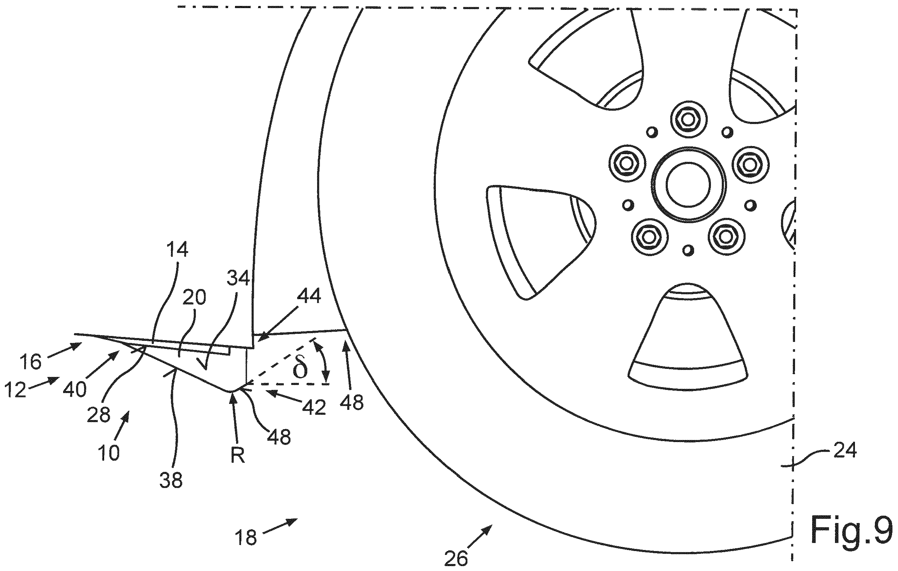

Die Fig. 9 zeigt eine weitere Ausführungsform des Luftleitkörpers 20. An die untere Luftleitfläche 38 des Luftleitkörpers 20 schließt sich in Fahrzeuglängsrichtung nach hinten eine weitere untere Luftleitfläche 48 des Luftleitkörpers 20 an, wobei die weitere untere Luftleitfläche 48 von vorne unten nach hinten oben verläuft und mit der Fahrzeuglängsrichtung einen Winkel δ einschließt. Vorzugsweise liegt der Winkel δ in einem Bereich von einschließlich 0° bis einschließlich 60°. Die weitere untere Luftleitfläche 48 endet dabei mit einer scharfen Abrisskante des Luftleitkörpers 20.

Wie der Fig. 9 ferner zu entnehmen ist, geht die erste untere Luftleitfläche 38 in die weitere untere Luftleitfläche 48 mit einem Radius R und somit konvex über.

### Bezugszeichenliste

- 10: Anordnung
- 12: Luftleitvorrichtung
- 14: Verkleidungsteil
- 16: Unterboden
- 18: Personenkraftwagen
- 20: Luftleitkörper
- 22: Radspoiler
- 24: Vorderrad
- 26: Vorderachse
- 28: Unterseite
- 30: erster Leitbereich
- 32: zweiter Leitbereich
- 34: seitliche Luftleitfläche
- 36: seitliche Luftleitfläche
- 38: untere Luftleitfläche
- 40: Vorderkante
- 42: Hinterkante
- 44: Vorderkante
- 46: Radhaus
- 48: weitere untere Luftleitfläche
- a: Abstand
- d: Abstand
- R: Radius
- S: Spitze
- α: Winkel
- β: Winkel
- *γ*: Winkel
- δ: Winkel

## Patentansprüche

1. Anordnung (10) einer Luftleitvorrichtung (12) an einem Bauelement (14) eines Fahrzeugs (18), bei welcher wenigstens ein Luftleitelement (20) der Luftleitvorrichtung (12) in Fahrzeuglängsrichtung vor einem Rad (24) des Fahrzeugs (18) angeordnet ist und zumindest bereichsweise von dem Bauelement (14) in Fahrzeughochrichtung nach unten absteht, wobei das Luftleitelement (20) wenigstens zwei in Fahrzeugquerrichtung voneinander abgewandte und sich in Fahrzeuglängsrichtung von vorne nach hinten voneinander weg erstreckende, seitliche Luftleitflächen (34, 36) sowie wenigstens eine in Fahrzeugquerrichtung zumindest teilweise zwischen den seitlichen Luftleitflächen (34, 36) angeordnete und von vorne oben nach hinten unten verlaufende, untere Luftleitfläche (38) umfasst, wobei die seitlichen Luftleitflächen (34, 36) in Fahrzeuglängsrichtung nach vorne zu einer Spitze (S) aufeinander zulaufen oder das Luftleitelement (20) eine gerade Vorderkante (40) aufweist, welche zumindest im Wesentlichen in Fahrzeugquerrichtung verläuft,
**dadurch gekennzeichnet, dass** die Luftleitvorrichtung (12) am Bauelement in Form eines Verkleidungsteils (14) eines Unterbodens eines Personenkraftwagens angeordnet ist und die Luftleitvorrichtung (12) das als Luftleitkörper (20) ausgebildete Luftleitelement (20) sowie einen als Radstaulippe ausgebildeten Radspoiler (22) umfasst,
wobei das Luftleitelement (20) mit dem Radspoiler (22) im Bauelement (14) integriert ist und
wobei der Radspoiler (22) in einem vorgebbaren Abstand (d) von dem Luftleitelement (20) in Fahrzeuglängsrichtung nach hinten beabstandet ist.

2. Anordnung (10) nach Anspruch 1,
**dadurch gekennzeichnet, dass**
sich die seitlichen Luftleitflächen (34, 36) in Fahrzeughochrichtung von oben nach unten lediglich bis auf Höhe der unteren Luftleitfläche (38) erstrecken.

3. Anordnung (10) nach einem der Ansprüche 1 oder 2,
**dadurch gekennzeichnet, dass**
ein in Fahrzeugquerrichtung verlaufender Abstand zwischen den seitlichen Luftleitflächen durch die untere Luftleitfläche (38) überbrückt ist.

4. Anordnung (10) nach einem der vorhergehenden Ansprüche,
**dadurch gekennzeichnet, dass**
die untere Luftleitfläche (38) mit der Fahrzeuglängsrichtung einen Winkel (*γ*) von bis zu 60 Grad einschließt.

5. Anordnung (10) nach Anspruch 4,
**dadurch gekennzeichnet, dass**
der Winkel (*γ*) zwischen der unteren Luftleitfläche (38) und der Fahrzeuglängsrichtung in einem Bereich von einschließlich 10 Grad bis einschließlich 30 Grad liegt.

6. Anordnung (10) nach einem der vorhergehenden Ansprüche,
**dadurch gekennzeichnet, dass**
das Luftleitelement (20) auf einer dem Rad (24) zugewandten Seite wenigstens eine Abrisskante (42) aufweist.

7. Anordnung (10) nach einem der vorhergehenden Ansprüche,
**dadurch gekennzeichnet, dass**
jeweilige Übergangsbereiche zwischen den seitlichen Luftleitflächen (34, 36) und der unteren Luftleitfläche (38) mit einem Radius ausgebildet sind.

8. Anordnung (10) nach Anspruch 7,
**dadurch gekennzeichnet, dass**
der Radius maximal die Hälfte der Höhe beträgt, um die das Luftleitelement (20) von dem Bauelement (14) nach unten absteht.

9. Anordnung (10) nach einem der vorhergehenden Ansprüche,
**dadurch gekennzeichnet, dass**
das Luftleitelement (20) um eine Schwenkachse in Fahrzeughochrichtung nach oben verschwenkbar ist.

10. Anordnung (10) nach einem der vorhergehenden Ansprüche,
**dadurch gekennzeichnet, dass**
sich an die untere Luftleitfläche (38) in Fahrzeuglängsrichtung nach hinten eine weitere untere Luftleitfläche (48) des Luftleitelements (20) anschließt, welche von vorne unten nach hinten oben verläuft.

11. Anordnung (10) nach Anspruch 10,
**dadurch gekennzeichnet, dass**
die erste untere Luftleitfläche (38) mit einem Radius in die weitere untere Luftleitfläche (48) übergeht.

## Claims

1. An arrangement (10) of an air-deflecting device (12) on a component (14) of a vehicle (18), in which at least one air-deflecting element (20) of the air-deflecting device (12) is arranged in the longitudinal direction of the vehicle in front of a wheel (24) of the vehicle (18) and at least in regions protrudes downwards from the component (14) in the vertical direction of the vehicle, wherein the air-deflecting element (20) comprises at least two lateral air-deflecting faces (34, 36) facing away from each other in the transverse direction of the vehicle and extending away from each other in the longitudinal direction of the vehicle from front to back, and also at least one lower air-deflecting face (38) arranged in the transverse direction of the vehicle at least partially between the lateral air-deflecting faces (34, 36) and running from top front to bottom back, wherein the lateral air-deflecting faces (34, 36) run towards one another in the longitudinal direction of the vehicle towards the front to form a point (S) or the air-deflecting element (20) has a straight front edge (40) which runs at least substantially in the transverse direction of the vehicle,
**characterised in that** the air-deflecting device (12) is arranged on the component in the form of a trim panel (14) of an underside of a passenger car and the air-deflecting device (12) comprises the air-deflecting element (20) which is formed as an air-deflecting body (20) and also a wheel spoiler (22) formed as a wheel deflector lip,
wherein the air-deflecting element (20) is integrated in the component (14) with the wheel spoiler (22), and
wherein the wheel spoiler (22) is spaced apart towards the back in the longitudinal direction of the vehicle at a pre-settable distance (d) from the air-deflecting element (20).

2. An arrangement (10) according to Claim 1,
**characterised in that**
the lateral air-deflecting faces (34, 36) extend in the vertical direction of the vehicle from top to bottom merely as far as the height of the lower air-deflecting face (38).

3. An arrangement (10) according to one of Claims 1 or 2,
**characterised in that**
a distance between the lateral air-deflecting faces which extends in the transverse direction of the vehicle is bridged by the lower air-deflecting face (38).

4. An arrangement (10) according to one of the preceding claims,
**characterised in that**
the lower air-deflecting face (38) encloses an angle (*γ*) of up to 60 degrees with the longitudinal direction of the vehicle.

5. An arrangement (10) according to Claim 4,
**characterised in that**
the angle (*γ*) between the lower air-deflecting face (38) and the longitudinal direction of the vehicle lies in a range from including 10 degrees up to and including 30 degrees.

6. An arrangement (10) according to one of the preceding claims,
**characterised in that**
the air-deflecting element (20) has at least one separation edge (42) on a side facing the wheel (24).

7. An arrangement (10) according to one of the preceding claims,
**characterised in that**
respective regions of transition between the lateral air-deflecting faces (34, 36) and the lower air-deflecting face (38) are formed with a radius.

8. An arrangement (10) according to Claim 7,
**characterised in that**
the radius is at most half the height by which the air-deflecting element (20) protrudes downwards from the component (14).

9. An arrangement (10) according to one of the preceding claims,
**characterised in that**
the air-deflecting element (20) is pivotable upwards about a pivot axis in the vertical direction of the vehicle.

10. An arrangement (10) according to one of the preceding claims,
**characterised in that**
a further lower air-deflecting face (48) of the air-deflecting element (20) adjoins the lower air-deflecting face (38) in the longitudinal direction of the vehicle towards the back, which surface (48) runs from bottom front to top back.

11. An arrangement (10) according to Claim 10,
**characterised in that**
the first lower air-deflecting face (38) merges with a radius into the further lower air-deflecting face (48).

## Revendications

1. Agencement (10) d'un dispositif de canalisation d'air (12) sur un composant (14) d'un véhicule (18) dans lequel au moins un élément de canalisation d'air (20) du dispositif de canalisation d'air (12) est monté dans la direction longitudinale du véhicule (18) à l'avant d'une roue (24) de celui-ci, et s'étend vers le bas au moins par zones à partir du composant (14) dans la direction verticale du véhicule, l'élément de canalisation d'air (20) comprenant au moins deux surfaces de canalisation d'air latérales (34, 36) opposées l'une à l'autre dans la direction transversale du véhicule et s'écartant l'une de l'autre dans la direction longitudinale du véhicule de l'avant vers l'arrière, ainsi qu'au moins une surface de canalisation d'air inférieure (38) montée dans la direction transversale du véhicule au moins partiellement entre les surfaces de canalisation d'air latérales (34, 36) et s'étendant de l'avant et du haut vers l'arrière et le bas, les surfaces de canalisation d'air latérales (34, 36) s'étendant l'une vers l'autre dans la direction longitudinale du véhicule vers l'avant, vers une pointe (S), ou l'élément de canalisation d'air (20) ayant une arête avant rectiligne (40) s'étendant au moins essentiellement dans la direction transversale du véhicule,
**caractérisé en ce que**
le dispositif de canalisation d'air (12) est monté sur le composant sous la forme d'une pièce de revêtement (14) du dessous de caisse d'un véhicule de tourisme, et comporte l'élément de canalisation d'air (20) qui est réalisé sous la forme d'un corps de canalisation d'air (20) ainsi qu'un déporteur de roue réalisé sous la forme d'une lèvre de retenue,
l'élément de canalisation d'air (20) étant intégré dans le composant (14) avec le déporteur de roue (22), et
le déporteur de roue (22) étant écarté vers l'arrière d'une distance (d) prédéfinissable de l'élément de canalisation d'air (20) dans la direction longitudinale du véhicule.

2. Agencement (10) conforme à la revendication 1,
**caractérisé en ce que**
les surfaces de canalisation d'air latérales (34, 36) ne s'étendent dans la direction verticale du véhicule du haut vers le bas que jusqu'à la hauteur de la surface de canalisation d'air inférieure (38).

3. Agencement (10) conforme à l'une des revendications 1 et 2,
**caractérisé en ce que**
la distance dans la direction transversale du véhicule entre les surfaces de canalisation d'air latérales est surmontée par la surface de canalisation d'air inférieure (38).

4. Agencement (10) conforme à l'une des revendications précédentes, **caractérisé en ce que**
la surface de canalisation d'air inférieure (38) définit avec la direction longitudinale du véhicule un angle (γ) allant jusqu'à 60 degrés.

5. Agencement (10) conforme à la revendication4,
**caractérisé en ce que**
l'angle (γ) entre la surface de canalisation d'air inférieure (38) et la direction longitudinale du véhicule est situé dans une plage comprise entre 10 degrés inclusivement et 30 degrés inclusivement.

6. Agencement (10) conforme à l'une des revendications précédentes,
**caractérisé en ce que**
l'élément de canalisation d'air (20) comprend, sur son côté tourné vers la roue (24) au moins une arête de rupture (42).

7. Agencement (10) conforme à l'une des revendications précédentes,
**caractérisé en ce que**
chaque zone de transition entre les surfaces de canalisation d'air latérales (34, 36) et la surface de canalisation d'air inférieure (38) est réalisée avec un rayon.

8. Agencement (10) conforme à la revendication 7,
**caractérisé en ce que**
le rayon est au maximum égal à la moitié de la hauteur dont l'élément de canalisation d'air (20) s'écarte vers le bas du composant (14).

9. Agencement (10) conforme à l'une des revendications précédentes,
**caractérisé en ce que**
l'élément de canalisation d'air (20) peut pivoter vers le haut autour d'un axe de pivotement dans la direction d'élévation du véhicule.

10. Agencement (10) conforme à l'une des revendications précédentes,
**caractérisé en ce que**
se connecte sur la surface de canalisation d'air inférieure (38), vers l'arrière dans la direction longitudinale du véhicule, une autre surface de canalisation d'air inférieure (48) de l'élément de canalisation d'air (20) qui s'étend de l'avant et du bas vers l'arrière et le haut.

11. Agencement (10) conforme à la revendication 10,
**caractérisé en ce que**
la première surface de canalisation d'air inférieure (38) se prolonge par l'autre surface de canalisation d'air inférieure (48) avec un rayon.
